# EUROPEAN PATENT SPECIFICATION

(11) **EP 2 267 349 B1**
(45) Date of publication and mention of the grant of the patent: **08.03.2017**
(21) Application number: 08873937.0
(22) Date of filing: 11.12.2008
(51) Int. Cl.: F16J 15/40, F16L 23/00, F16L 23/16, F16J 15/14

(54) **PIPE CONNECTION DEVICE**
ROHRVERBINDUNGSVORRICHTUNG
DISPOSITIF DE RACCORDEMENT DE TUYAU

(30) Priority: 14.04.2008 JP 2008104240
(43) Date of publication of application: 29.12.2010
(73) Proprietor: Mitsubishi Heavy Industries, Ltd., Tokyo 108-8215 (JP)
(72) Inventor: KITAGUCHI, Yoshinori, Takasago-shi Hyogo 676-8686 (JP)
(74) Representative: Henkel, Breuer & Partner
(86) International application number: PCT/JP2008/072573
(87) International publication number: WO 2009/128182

(56) References cited:
- CH-A5- 624 192
- GB-A- 2 142 440
- JP-A- 50 085 916
- JP-A- 2004 052 860
- JP-B- 6 021 745
- JP-U- 58 169 262
- JP-Y1- 51 016 485
- US-A- 725 937
- US-A- 2 761 311
- US-A- 3 877 488
- US-A- 5 472 215

## Description

### Technical Field

This invention relates to a pipe connection device, which is designed to prevent leakage of a gas from a site of connection or a joint with the use of a liquid contained in a gas/liquid two-phase fluid comprising the gas and the liquid mixed therein, in connecting piping and another piping for flowing the gas/liquid two-phase fluid.

### Background Art

In a thermal power plant or a chemical plant, many pipes are routed and arranged. In this case, one of the pipes and another of the pipes may be connected by flanges for convenience in connecting the pipes.

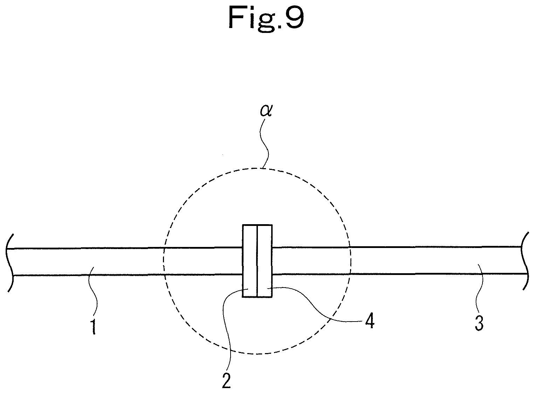

Fig. 9 shows a conventional flange connection structure (pipe connection device) to be applied to piping or a pipe. As shown in the drawing, a flange 2 is formed on one pipe 1, and a flange 4 is formed on another pipe 3. A gasket is interposed between a flange surface of the flange 2 and a flange surface of the flange 4, and the flanges 2 and 4 are fastened by bolts (not shown), whereby the flange surface of the flange 2 and the flange surface of the flange 4 are connected together. By so doing, the pipe 1 and the pipe 4 are coupled together.

If the pipes 1 and 3 are coupled by such a pipe connection device, it suffices to loosen and detach the bolts fastening the flanges 2 and 4, when releasing the pipes 1 and 3 for maintenance, inspection or cleaning. By this measure, the pipes 1 and 3 can be released.

In restoring the pipes 1, 3 to the original state, it is enough to perform the simple work of fastening the flanges 2 and 4 by the bolts.

Patent Document 1: JP-10-038159A
Patent Document 2: JP-06-021745B

US 725937A discloses a pipe connection device where the top and bottom pots are respectively welded to the top and bottom (or upstream-side and downstream-side) pipings. The tubular walls of the pots are simply nested into each other and prevented from separating. Accordingly, there is no fluid-tight flange connection between the pots and the seal between the up- and downstream-side pipings is the liquid existing between the nested pots.

US 2761311A relates to a pipe collar tester and not to a pipe connection device as such.

GB 2142400A discloses an apparatus for leak testing of a pipe but is not primarily related to a pipe connection device as such. The upstream- and downstream-side pipings are connected by a threaded sleeve connecting the respective pipings at the outer peripheral surfaces.

US5472215A discloses a seal device for connecting pipings of which one is rotatable relative to the other.

US 3877488A discloses a water-seal expansion joint for a venturi scrubber which is a specific application of a seal that is different from the pipe connection device for a gas/liquid two-phase fluid of the invention at least in that it lacks the flange connection that is sealed with respect to the gas portion by the liquid accumulating in the accommodation space of the pipe connection device.

### Disclosure of the Invention

### Problems to be solved by the invention

So far, the flange connection structure for a pipe has been considered to be a sealing structure capable of complete sealing.

With a recent plant, etc. of which higher safety and higher reliability are demanded, however, even the above-mentioned flange connection structure has been assumed not to be necessarily perfect in sealing properties, and has been required to undergo some safety measure.

For example, if the fluid flowed through the pipes 1, 3 shown in Fig. 9 is a gas/liquid two-phase fluid comprising a positive-pressure combustible gas (hydrogen gas) and a liquid (oil), a region α surrounding the flange connection structure shown in Fig. 9 is designated as an explosion-proof range.

In the region α designated as the explosion-proof range, an instrument or a gauge, which becomes an ignition source, has not been installed. By so doing, even if the hydrogen gas leaks, the occurrence of an accident such as combustion or explosion can be prevented, with the result that safety has been ensured.

However, the above measure of designating the explosion-proof range and avoiding the installation of an instrument, etc. in this range has posed the problem that the design of the plant is limited in the degree of freedom.

If it is intended to prevent the leakage of the gas reliably in the flange connection structure for the pipe, on the other hand, the pipes are connected by welding. This measure has aroused the problem that the degree of freedom of arrangement of the pipes is lost, and inspection and cleaning cannot be carried out.

The present invention has been accomplished in the light of the above-described conventional technologies. It is an object of the present invention to provide a pipe connection device for connecting pipes, through which a gas/liquid two-phase fluid comprising a gas and a liquid mixed therein is flowed, the pipe connection device having sealing properties for a gas enhanced with the use of the liquid contained in the gas/liquid two-phase fluid.

### Means for Solving the Problems

The present invention, for solving the above-mentioned problems, provides a pipe connection device with the features of the attached claim.

The present invention specifically provides a pipe connection device connecting an upstream-side piping and a downstream-side piping for passing the gas/liquid two-phase fluid comprising a gas and a liquid mixed therein, wherein the pipe connection device further comprises:
a pot which forms an accommodation space inside, with a lower end surface thereof in an open state, which has a flange formed on a peripheral edge of a lower end thereof, and which the upstream-side piping penetrates, an inflow opening end of the upstream-side piping being located in the accommodation space; and
a flange plate which is bolted to the flange of the pot for flange connection, thereby closing the lower end surface of the pot, and which the downstream-side piping penetrates,
an outflow opening end of the downstream-side piping being located above a position of the flange connection between the flange of the pot and the flange plate.

### Effects of the Invention

According to the present invention, the upstream-side piping is inserted, and the downstream-side piping is also inserted, into the accommodation space formed by the members including the pot, whereas the liquid contained in the gas/liquid two-phase fluid is stored in the lower space within the accommodation space. Moreover, the liquid level of the stored liquid is located above the site of flange connection or joint (connection surface).

At the flange joint (connection surface), therefore, the liquid contained in the gas/liquid two-phase fluid functions as a sealant for the gas contained in the gas/liquid two-phase fluid. Consequently, leakage of the gas can be prevented reliably, and the sealing properties can be enhanced.

In this manner, the incidence of gas leaks from the pipe connection device can be decreased dramatically. As a result, the surroundings of the pipe connection device need not be designated as the explosion-proof range or the like, and the degree of freedom to design the pipes, etc. can be raised. Since the pipe connection device utilizing the flange connection can be adopted, moreover, overhaul inspection and cleaning can be performed easily.

### Brief Description of the Drawings

[Fig. 1] Fig. 1 is a configurational drawing showing a pipe connection device for a gas/liquid two-phase fluid according to Embodiment 1 of the present invention.
[Fig. 2] Fig. 2 is a configurational drawing showing a pipe connection device for a gas/liquid two-phase fluid according to Example 1 serving to explain features of the present invention.
[Fig. 3] Fig. 3 is an explanation drawing showing the state of a flushing operation in Example 1.
[Fig. 4] Fig. 4 is a configurational drawing showing a pipe connection device for a gas/liquid two-phase fluid according to Example 2 serving to explain features of the present invention.
[Fig. 5] Fig. 5 is an explanation drawing showing the state of a flushing operation in Example 2.
[Fig. 6] Fig. 6 is a configurational drawing showing a pipe connection device for a gas/liquid two-phase fluid according to Example 3 serving to explain features of the present invention.
[Fig. 7] Fig. 7 is a configurational drawing showing a pipe connection device for a gas/liquid two-phase fluid according to Example 4 serving to explain features of the present invention.
[Fig. 8] Fig. 8 is an explanation drawing showing the state of a flushing operation in Example 4.
[Fig. 9] Fig. 9 is a configurational drawing showing a conventional pipe connection device.

### Description of the Numerals

- 100, 200, 300, 400, 500:: Pipe connection device
- 101, 201, 301, 401, 501:: Upstream-side piping
- 102, 202, 302, 402, 502:: Downstream-side piping
- 110, 210, 310, 330, 410, 430, 510, 530:: Pot
- 120, 220, 320, 520:: Flange plate
- 230:: Coupling tube
- 240, 340, 440, 540:: Extension piping

### Best Mode for Carrying Out the Invention

The best mode for carrying out the present invention will be described in detail below based on an embodiment and examples serving to explain features of the invention.

### Embodiment 1

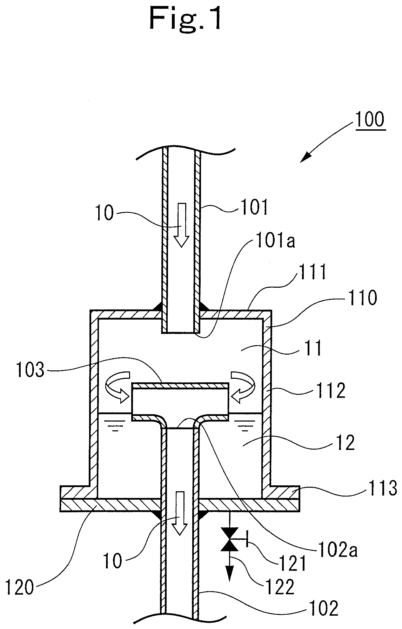

Fig. 1 shows a pipe connection device 100 for a gas/liquid two-phase fluid according to Embodiment 1 of the present invention.

As shown in Fig. 1, upstream-side piping 101 is disposed along a direction from above downward. The upstream-side piping 101 allows a gas/liquid two-phase fluid 10 comprising a mixture of a hydrogen gas 11 and an oil 12 to pass, and flows the gas/liquid two-phase fluid 10 into a pot 110 through an inflow opening end 101a which is the lower end opening of the upstream-side piping 101.

Downstream-side piping 102 is disposed along a direction from above downward at a position lower than the upstream-side piping 101. The downstream-side piping 102 flows out the gas/liquid two-phase fluid 10 through an outflow opening end 102a, which is the upper end opening of the downstream-side piping 102, and allows the gas/liquid two-phase fluid 10 to pass. In the present embodiment, an outflow pipe 103 open at both ends and placed horizontally is disposed at the upper end of the downstream-side piping 102.

The pot 110 has an upper end surface 111, a tubular side surface 112, and a flange 113 formed on the peripheral edge at the lower end of the side surface 112, and is open at a lower end surface thereof. That is, the pot 110 forms an accommodation space inside, with its lower end surface in an open state.

The upstream-side piping 101 penetrates the upper end surface 111 of the pot 110 from above downward, and its inflow opening end 101a is located inside the accommodation space of the pot 110 . Welding has been performed between the upstream-side piping 101 and the upper surface end 111 of the pot 110.

A flange plate 120 in the form of a plate closes the lower end surface of the pot 110. The flange plate 120 has a peripheral edge part bolted to the flange 113 of the pot 110 by bolts (not shown). In this manner, the flange plate 120 and the pot 110 are connected by flanges.

The downstream-side piping 102 penetrates the flange plate 120 from below upward, and fixing takes place between the downstream-side piping 102 and the flange plate 120 by welding or other connecting means. The outflow opening end 102a of the downstream-side piping 102 is located upwardly of the position of flange connection between the flange 113 of the pot 110 and the flange plate 120.

A drain pipe 122 having a drain valve 121 interposed therein is coupled to the flange plate 120, and the drain pipe 122 communicates with the accommodation space of the pot 110.

With the pipe connection device 100 for a gas/liquid two-phase fluid configured as above, when the gas/liquid two-phase fluid 10 flows from the upstream-side piping 101 into the pot 110, with the drain valve 121 being closed, the hydrogen gas 11 builds up at a position above the outflow opening end 102a, and the oil 12 is stored at a position below the outflow opening end 102a, in the accommodation space within the pot 110.

When, in this state, the gas/liquid two-phase fluid 10 flows continuously from the upstream-side piping 101 into the pot 110, the hydrogen gas 11 and the oil 12 within the pot 110 flow out through the outflow opening end 102a into the downstream-side piping 102, and pass through the downstream-side piping 102 as the gas/liquid two-phase fluid 10.

Since the pot 110 is constantly supplied with the gas/liquid two-phase fluid 10 from the upstream-side piping 101, the oil 12 is always stored within the pot 110.

In the present embodiment, the outflow opening end 102a of the downstream-side piping 102 is located upwardly of the site of flange connection between the flange 113 of the pot 110 and the flange plate 120. Thus, the oil 12 is always stored in a portion of the accommodation space within the pot 110 which is downward of the outflow opening end 102a.

As a result, the oil 12 is always present in the site of flange connection between the flange 113 and the flange plate 120, and this oil 12 functions as a sealant for the hydrogen gas 11. Hence, the hydrogen gas 11 can be reliably prevented from leaking from the site of flange connection between the flange 113 and the flange plate 120.

Thus, the incidence of leaks of the hydrogen gas 11, which is a combustible gas, can be dramatically decreased, and safety is improved. Moreover, it becomes unnecessary to set the surroundings of the pipe connection device 100 as the explosion-proof range.

Furthermore, a level detecting mechanism for monitoring the liquid level of the oil 12 stored within the pot 110 can be provided.

By so doing, when the level detecting mechanism detects that the liquid level of the oil 12 has become lower than the height of the outflow opening end 102a, it is determined that oil leakage has occurred. Based on this determination, a measure, such as stoppage of the passage of the gas/liquid two-phase fluid 10, may be taken, whereby reliability can be further increased.

In the foregoing Embodiment 1, the gas/liquid two-phase fluid 10 is a mixture of the hydrogen gas 11 and the oil 12. However, Embodiment 1 can be applied, unchanged, even to a gas/liquid two-phase fluid comprising other gas and other liquid mixed.

### Example 1

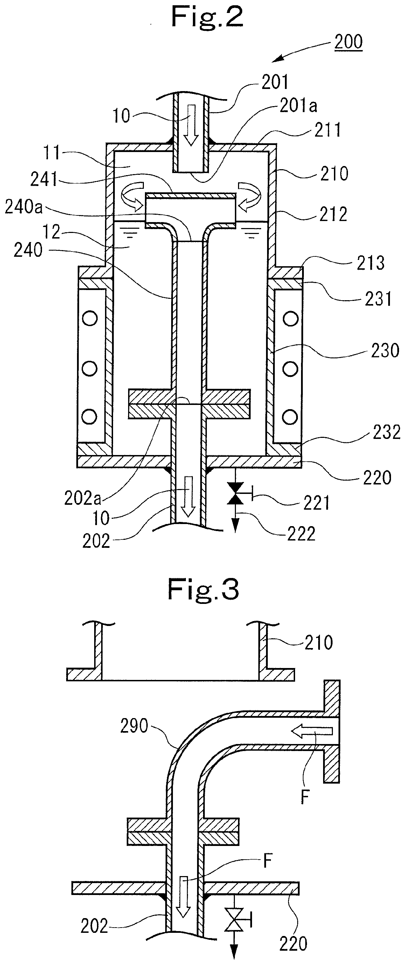

Fig. 2 shows a pipe connection device 200 for a gas/liquid two-phase fluid according to Example 1 serving to explain features of the present invention.

As shown in Fig. 2, upstream-side piping 201 is disposed along a direction from above downward. The upstream-side piping 201 allows a gas/liquid two-phase fluid 10 comprising a mixture of a hydrogen gas 11 and an oil 12 to pass, and flows the gas/liquid two-phase fluid 10 into a pot 210 through an inflow opening end 201a which is the lower end opening of the upstream-side piping 201.

Downstream-side piping 202 is disposed along a direction from above downward at a position lower than the upstream-side piping 201. The downstream-side piping 202 flows out the gas/liquid two-phase fluid 10 through an outflow opening end 202a, which is the upper end opening of the downstream-side piping 202, and allows the gas/liquid two-phase fluid 10 to pass.

The pot 210 has an upper end surface 211, a tubular side surface 212, and a flange 213 formed on the peripheral edge at the lower end of the side surface 212, and is open at a lower end surface thereof. That is, the pot 210 forms an accommodation space inside, with its lower end surface in an open state.

The upstream-side piping 201 penetrates the upper end surface 211 of the pot 210 from above downward, and its inflow opening end 201a is located inside the accommodation space of the pot 210. Welding has been performed between the upstream-side piping 201 and the upper surface end 211 of the pot 210.

A flange plate 220 in the form of a plate is penetrated by the downstream-side piping 202 from below upward, and welding has been performed between the downstream-side piping 202 and the flange plate 220. The outflow opening end 202a of the downstream-side piping 202 is located upwardly of the flange plate 220.

A drain pipe 222 having a drain valve 221 interposed therein is coupled to the flange plate 220.

A coupling tube 230 as a tubular member is disposed between the pot 210 and the flange plate 220. The coupling tube 230 assumes a tubular shape formed by dividing a tubular member into halves along the longitudinal direction (up-and-down direction in the drawing) to form curved members, and coupling the curved members together along the circumferential direction.

The coupling tube 230 has an upper flange 231 formed on the peripheral edge at its upper end, and a lower flange 232 formed on the peripheral edge at its lower end.

The coupling tube 230 has the upper flange 231 bolted to the flange 213 of the pot 210 by bolts (not shown) for flange connection.

The coupling tube 230 also has the lower flange 232 bolted to a peripheral edge part of the flange plate 220 by bolts (not shown) for flange connection.

Extension piping 240 has a lower end coupled to the outflow opening end 202a of the downstream-side piping 202 by a flange or other connecting means. An upper end opening 240a of the extension piping 240 is located above the position of flange connection between the flange 213 of the pot 210 and the upper flange 231 of the coupling tube 230, and above the position of flange connection between the lower flange 232 of the coupling tube 230 and the flange plate 220.

In the present example, an outflow pipe 241 open at both ends and disposed horizontally is placed on the upper end of the extension piping 240.

With the pipe connection device 200 for a gas/liquid two-phase fluid configured as above, the gas/liquid two-phase fluid 10 flows from the upstream-side piping 201 into the pot 210, with the drain valve 221 being closed. As a result, the hydrogen gas 11 builds up at a position above the upper end opening 240a of the extension piping 240 in the interior accommodation space formed by enclosure by the pot 210, the coupling tube 230, and the flange plate 220, and the oil 12 is stored at a position below the upper end opening 240a.

When, in this state, the gas/liquid two-phase fluid 10 flows continuously from the upstream-side piping 201 into the pot 210, the hydrogen gas 11 and the oil 12 within the interior accommodation space formed by enclosure by the pot 210, the coupling tube 230, and the flange plate 220 flow out through the upper end opening 240a into the extension piping 240, and pass through the downstream-side piping 202 as the gas/liquid two-phase fluid 10.

Since the pot 210 is constantly supplied with the gas/liquid two-phase fluid 10 from the upstream-side piping 201, the oil 12 is always stored within the accommodation space.

In the present example, the upper end opening 240a of the extension piping 240 is located above the position of flange connection between the flange 213 of the pot 210 and the upper flange 231 of the coupling tube 230, above the position of flange connection between the lower flange 232 of the coupling tube 230 and the flange plate 220, and above the joints of the halves of the coupling tube 230. Thus, the oil 12 is always stored at the position below the upper end opening 240a in the interior accommodation space.

Consequently, the oil 12 is always present in the site of flange connection between the flange 213 of the pot 210 and the upper flange 231 of the coupling tube 230, and in the site of flange connection between the lower flange 232 of the coupling tube 230 and the flange plate 220, and this oil 12 functions as a sealant for the hydrogen gas 11.

Hence, the hydrogen gas 11 can be reliably prevented from leaking from the site of flange connection between the flange 213 of the pot 210 and the upper flange 231 of the coupling tube 230, or from the site of flange connection between the lower flange 232 of the coupling tube 230 and the flange plate 220.

Thus, the incidence of leaks of the hydrogen gas 11, which is a combustible gas, can be dramatically decreased, and safety is improved. Moreover, it becomes unnecessary to set the surroundings of the pipe connection device 200 as the explosion-proof range.

Furthermore, a level detecting mechanism for monitoring the liquid level of the oil 12 stored within the accommodation space can be provided.

By so doing, when the level detecting mechanism detects that the liquid level of the oil 12 has become lower than the upper end opening 240a, it is determined that oil leakage has occurred. Based on this determination, a measure, such as stoppage of the passage of the gas/liquid two-phase fluid 10, may be taken, whereby reliability can be further increased.

In carrying out flushing or the like, the coupling tube 230 and the extension piping 240 are detached, as shown in Fig. 3.

That is, the flange connection between the flange 213 of the pot 210 and the upper flange 231 of the coupling tube 230 is released, and the flange connection between the lower flange 232 of the coupling tube 230 and the flange plate 220 is also released. Moreover, the coupling tube 230 is disassembled into the halved curved members, which are then removed. Furthermore, the connection between the extension piping 240 and the downstream-side piping 202 is released, and the extension piping 240 is removed.

As shown in Fig. 3, with the coupling tube 230 and the extension piping 240 being detached, temporary piping 290 is connected to the downstream-side piping 202, and a flushing liquid F is supplied, whereby a flushing operation can be performed.

In the foregoing Example 1, the gas/liquid two-phase fluid 10 is a mixture of the hydrogen gas 11 and the oil 12. However, Example 1 can be applied, unchanged, even to a gas/liquid two-phase fluid comprising other gas and other liquid mixed.

### Example 2

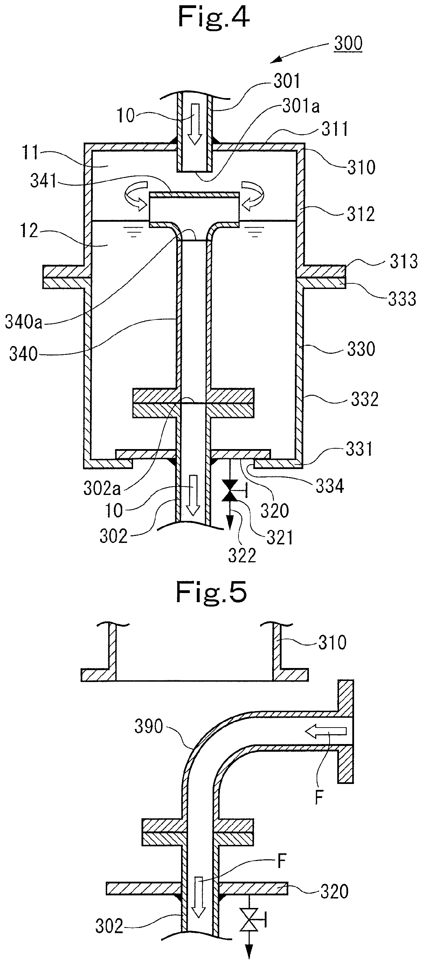

Fig. 4 shows a pipe connection device 300 for a gas/liquid two-phase fluid according to Example 2 serving to explain features of the present invention.

As shown in Fig. 4, upstream-side piping 301 is disposed along a direction from above downward. The upstream-side piping 301 allows a gas/liquid two-phase fluid 10 comprising a mixture of a hydrogen gas 11 and an oil 12 to pass, and flows the gas/liquid two-phase fluid 10 into a pot 310 through an inflow opening end 301a which is the lower end opening of the upstream-side piping 301.

Downstream-side piping 302 is disposed along a direction from above downward at a position lower than the upstream-side piping 301. The downstream-side piping 302 flows out the gas/liquid two-phase fluid 10 through an outflow opening end 302a, which is the upper end opening of the downstream-side piping 302, and allows the gas/liquid two-phase fluid 10 to pass.

The pot 310 has an upper end surface 311, a tubular side surface 312, and a flange 313 formed on the peripheral edge at the lower end of the side surface 312, and is open at a lower end surface thereof. That is, the pot 310 forms an accommodation space inside, with its lower end surface in an open state.

The upstream-side piping 301 penetrates the upper end surface 311 of the pot 310 from above downward, and its inflow opening end 301a is located inside the accommodation space of the pot 310. Welding has been performed between the upstream-side piping 301 and the upper surface end 311 of the pot 310.

A flange plate 320 in the form of a plate is penetrated by the downstream-side piping 302 from below upward, and welding has been performed between the downstream-side piping 302 and the flange plate 320. The outflow opening end 302a of the downstream-side piping 302 is located upwardly of the flange plate 320.

A drain pipe 322 having a drain valve 321 interposed therein is coupled to the flange plate 320.

A coupling pot 330 has a lower end surface 331, a tubular side surface 332, and a flange 333 formed on the peripheral edge at the upper end of the side surface 332, and is open at an upper end surface thereof. That is, the coupling pot 330 forms an accommodation space inside, with its upper end surface in an open state.

An opening portion 334 is formed at the lower end surface of the coupling pot 330.

The flange 333 of the coupling pot 330 and the flange 313 of the pot 310 are bolted together by bolts (not shown) for flange connection. Thus, the accommodation space of the coupling pot 330 and the accommodation space of the pot 310 communicate with each other.

The flange plate 320 is inserted into the opening portion 334 formed in the lower end surface of the coupling pot 330, and the opening portion 334 and the flange plate 320 are coupled by a suitable means, with a watertight state being held.

Extension piping 340 has a lower end coupled to the outflow opening end 302a of the downstream-side piping 302 by a flange or other connecting means. An upper end opening 340a of the extension piping 340 is located above the position of flange connection between the flange 313 of the pot 310 and the flange 333 of the coupling pot 330, and above the position of connection between the opening portion 334 and the flange plate 320.

In the present example, an outflow pipe 341 open at both ends and disposed horizontally is placed on the upper end of the extension piping 340.

With the pipe connection device 300 for a gas/liquid two-phase fluid configured as above, the gas/liquid two-phase fluid 10 flows from the upstream-side piping 301 into the pot 310, with the drain valve 321 being closed. As a result, the hydrogen gas 11 builds up at a position above the upper end opening 340a of the extension piping 340 in the interior accommodation space formed by enclosure by the pot 310, the coupling pot 330, and the flange plate 320, and the oil 12 is stored at a position below the upper end opening 340a.

When, in this state, the gas/liquid two-phase fluid 10 flows continuously from the upstream-side piping 301 into the pot 310, the hydrogen gas 11 and the oil 12 within the interior accommodation space formed by enclosure by the pot 310, the coupling pot 330, and the flange plate 320 flow out through the upper end opening 340a into the extension piping 340, and pass through the downstream-side piping 302 as the gas/liquid two-phase fluid 10.

Since the pot 310 is constantly supplied with the gas/liquid two-phase fluid 10 from the upstream-side piping 301, the oil 12 is always stored within the accommodation space.

In the present example, the upper end opening 340a of the extension piping 340 is located above the position of flange connection between the flange 313 of the pot 310 and the flange 333 of the coupling pot 330, and above the position of connection between the opening portion 334 and the flange plate 320. Thus, the oil 12 is always stored at the position below the upper end opening 340a in the interior accommodation space.

Consequently, the oil 12 is always present in the site of flange connection between the flange 313 of the pot 310 and the flange 333 of the coupling pot 330, and in the site of connection or joint between the opening portion 334 and the flange plate 320, and this oil 12 functions as a sealant for the hydrogen gas 11.

Hence, the hydrogen gas 11 can be reliably prevented from leaking from the site of flange connection between the flange 313 of the pot 310 and the flange 333 of the coupling pot 330, and from the site of connection or joint between the opening portion 334 and the flange plate 320.

Thus, the incidence of leaks of the hydrogen gas 11, which is a combustible gas, can be dramatically decreased, and safety is improved. Moreover, it becomes unnecessary to set the surroundings of the pipe connection device 300 as the explosion-proof range.

Furthermore, a level detecting mechanism for monitoring the liquid level of the oil 12 stored within the accommodation space can be provided.

By so doing, when the level detecting mechanism detects that the liquid level of the oil 12 has become lower than the upper end opening 340a, it is determined that oil leakage has occurred. Based on this determination, a measure, such as stoppage of the passage of the gas/liquid two-phase fluid 10, may be taken, whereby reliability can be further increased.

In carrying out flushing or the like, the coupling pot 330 is detached, as shown in Fig. 5.

That is, the flange connection between the flange 313 of the pot 310 and the flange 333 of the coupling pot 330 is released, and the site of connection or joint between the flange plate 320 and the opening portion 334 is disconnected. Moreover, the connection between the extension piping 340 and the downstream-side piping 302 is released, and the extension piping 340 is removed.

As shown in Fig. 5, with the coupling pot 330 and the extension piping 340 being detached, temporary piping 390 is connected to the downstream-side piping 302, and a flushing liquid F is supplied, whereby a flushing operation can be performed.

In the foregoing Example 2, the gas/liquid two-phase fluid 10 is a mixture of the hydrogen gas 11 and the oil 12. However, Example 2 can be applied, unchanged, even to a gas/liquid two-phase fluid comprising other gas and other liquid mixed.

### Example 3

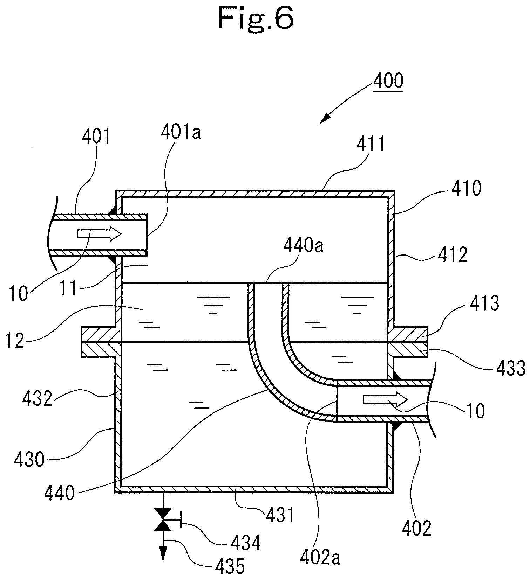

Fig. 6 shows a pipe connection device 400 for a gas/liquid two-phase fluid according to Example 3 not part of the present invention. As shown in Fig. 6, upstream-side piping 401 is disposed along a horizontal direction. The upstream-side piping 401 allows a gas/liquid two-phase fluid 10 comprising a mixture of a hydrogen gas 11 and an oil 12 to pass, and flows the gas/liquid two-phase fluid 10 into an upper pot 410 through an inflow opening end 401a.

Downstream-side piping 402 is disposed along a horizontal direction at a position lower than the upstream-side piping 401. The downstream-side piping 402 flows out the gas/liquid two-phase fluid 10 through an outflow opening end 402a, and allows the gas/liquid two-phase fluid 10 to pass.

The upper pot 410 has an upper end surface 411, a tubular side surface 412, and a flange 413 formed on the peripheral edge at the lower end of the side surface 412, and is open at a lower end surface thereof. That is, the upper pot 410 forms an accommodation space inside, with its lower end surface in an open state.

The upstream-side piping 401 penetrates the side surface 412 of the upper pot 410 in the horizontal direction, and its inflow opening end 401a is located inside the accommodation space of the upper pot 410. Welding has been performed between the upstream-side piping 401 and the side surface 412 of the upper pot 410.

A lower pot 430 has a lower end surface 431, a tubular side surface 432, and a flange 433 formed on the peripheral edge at the upper end of the side surface 432, and is open at an upper end surface thereof. That is, the lower pot 430 forms an accommodation space inside, with its upper end surface in an open state.

A drain pipe 435 having a drain valve 434 interposed therein is coupled to the lower end surface 431 of the lower pot 430.

The flange 433 of the lower pot 430 and the flange 413 of the upper pot 410 are bolted together by bolts (not shown) for flange connection. Thus, the accommodation space of the lower pot 430 and the accommodation space of the upper pot 410 communicate with each other.

The downstream-side piping 402 penetrates the side surface 432 of the lower pot 430 in the horizontal direction, and its outflow opening end 402a is located inside the accommodation space of the lower pot 430. Welding has been performed between the downstream-side piping 402 and the side surface 432 of the lower pot 430.

Extension piping 440 bends like an elbow, and has a lower end coupled to the outflow opening end 402a of the downstream-side piping 402. An upper end opening 440a of the extension piping 440 is located above the position of flange connection between the flange 413 of the upper pot 410 and the flange 433 of the lower pot 430.

With the pipe connection device 400 for a gas/liquid two-phase fluid configured as above, the gas/liquid two-phase fluid 10 flows from the upstream-side piping 401 into the upper pot 410, with the drain valve 434 being closed. As a result, the hydrogen gas 11 builds up at a position above the upper end opening 440a of the extension piping 440 in the interior accommodation space formed by enclosure by the upper pot 410 and the lower pot 430, and the oil 12 is stored at a position below the upper end opening 440a.

When, in this state, the gas/liquid two-phase fluid 10 flows continuously from the upstream-side piping 401 into the upper pot 410, the hydrogen gas 11 and the oil 12 within the interior accommodation space formed by enclosure by the upper pot 410 and the lower pot 430 flow through the upper end opening 440a into the extension piping 440, and pass through the downstream-side piping 402 as the gas/liquid two-phase fluid 10.

Since the upper pot 410 is constantly supplied with the gas/liquid two-phase fluid 10 from the upstream-side piping 401, the oil 12 is always stored within the accommodation space.

In the present example, the upper end opening 440a of the extension piping 440 is located above the position of flange connection between the flange 413 of the upper pot 410 and the flange 433 of the lower pot 430. Thus, the oil 12 is always stored at the position below the upper end opening 440a in the interior accommodation space.

Consequently, the oil 12 is always present in the site of flange connection between the flange 413 of the upper pot 410 and the flange 433 of the lower pot 430, and this oil 12 functions as a sealant for the hydrogen gas 11.

Hence, the hydrogen gas 11 can be reliably prevented from leaking from the site of flange connection between the flange 413 of the upper pot 410 and the flange 433 of the lower pot 430.

Thus, the incidence of leaks of the hydrogen gas 11, which is a combustible gas, can be dramatically decreased, and safety is improved. Moreover, it becomes unnecessary to set the surroundings of the pipe connection device 400 as the explosion-proof range.

Furthermore, a level detecting mechanism for monitoring the liquid level of the oil 12 stored within the accommodation space can be provided.

By so doing, when the level detecting mechanism detects that the liquid level of the oil 12 has become lower than the upper end opening 440a, it is determined that oil leakage has occurred. Based on this determination, a measure, such as stoppage of the passage of the gas/liquid two-phase fluid 10, may be taken, whereby reliability can be further increased.

In the foregoing Example 3, the gas/liquid two-phase fluid 10 is a mixture of the hydrogen gas 11 and the oil 12. However, Example 3 can be applied, unchanged, even to a gas/liquid two-phase fluid comprising other gas and other liquid mixed.

### Example 4

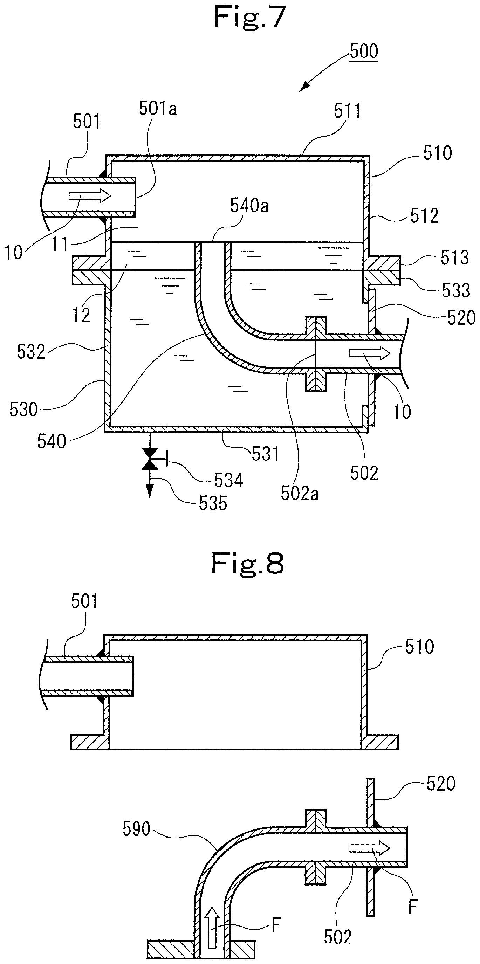

Fig. 7 shows a pipe connection device 500 for a gas/liquid two-phase fluid according to Example 4 not part of the present invention. As shown in Fig. 7, upstream-side piping 501 is disposed along a horizontal direction. The upstream-side piping 501 allows a gas/liquid two-phase fluid 10 comprising a mixture of a hydrogen gas 11 and an oil 12 to pass, and flows the gas/liquid two-phase fluid 10 into an upper pot 510 through an inflow opening end 501a.

Downstream-side piping 502 is disposed along a horizontal direction at a position lower than the upstream-side piping 501. The downstream-side piping 502 flows out the gas/liquid two-phase fluid 10 through an outflow opening end 502a, and allows the gas/liquid two-phase fluid 10 to pass.

The upper pot 510 has an upper end surface 511, a tubular side surface 512, and a flange 513 formed on the peripheral edge at the lower end of the side surface 512, and is open at a lower end surface thereof. That is, the upper pot 510 forms an accommodation space inside, with its lower end surface in an open state.

The upstream-side piping 501 penetrates the side surface 512 of the upper pot 510 in the horizontal direction, and its inflow opening end 501a is located inside the accommodation space of the upper pot 510. Welding has been performed between the upstream-side piping 501 and the side surface 512 of the upper pot 510.

A flange plate 520 in the form of a plate is penetrated by the downstream-side piping 502 in the horizontal direction, and welding has been performed between the downstream-side piping 502 and the flange plate 520.

The outflow opening end 502a of the downstream-side piping 502 is located inwardly (leftwardly in Fig. 7) of the flange plate 520. That is, the outflow opening end 502a of the downstream-side piping 502 is located in an accommodation space of a lower pot 530 to be described below.

The lower pot 530 has a lower end surface 531, a tubular side surface 532, and a flange 533 formed on the peripheral edge at the upper end of the side surface 532, and is open at an upper end surface thereof. That is, the lower pot 530 forms the accommodation space inside, with its upper end surface in an open state.

The flange 533 of the lower pot 530 and the flange 513 of the upper pot 510 are bolted together by bolts (not shown) for flange connection. Thus, the accommodation space of the lower pot 530 and the accommodation space of the upper pot 510 communicate with each other.

The flange plate 520 is bolted to the side surface 532 of the lower pot 530 by bolts (not shown) for flange connection. Since the flange plate 520 is thus connected to the side surface 532 by a flange, the flange plate 520 serves as a partial surface of the lower pot 530.

A drain pipe 535 having a drain valve 534 interposed therein is coupled to the bottom surface 531 of the lower pot 530.

Extension piping 540 bends like an elbow, and has a lower end coupled to the outflow opening end 502a of the downstream-side piping 502. An upper end opening 540a of the extension piping 540 is located above the position of flange connection between the flange 513 of the upper pot 510 and the flange 533 of the lower pot 530, and above the position of flange connection between the side surface 532 of the lower pot 530 and the flange plate 520.

With the pipe connection device 500 for a gas/liquid two-phase fluid configured as above, the gas/liquid two-phase fluid 10 flows from the upstream-side piping 501 into the upper pot 510, with the drain valve 534 being closed. As a result, the hydrogen gas 11 builds up at a position above the upper end opening 540a of the extension piping 540 in the interior accommodation space formed by enclosure by the upper pot 510, the lower pot 530 and the flange plate 520, and the oil 12 is stored at a position below the upper end opening 540a.

When, in this state, the gas/liquid two-phase fluid 10 flows continuously from the upstream-side piping 501 into the upper pot 510, the hydrogen gas 11 and the oil 12 within the interior accommodation space formed by enclosure by the upper pot 510, the lower pot 530 and the flange plate 520 flow through the upper end opening 540a into the extension piping 540, and pass through the downstream-side piping 502 as the gas/liquid two-phase fluid 10.

Since the upper pot 510 is constantly supplied with the gas/liquid two-phase fluid 10 from the upstream-side piping 501, the oil 12 is always stored within the accommodation space.

In the present example, the upper end opening 540a of the extension piping 540 is located above the position of flange connection between the flange 513 of the upper pot 510 and the flange 533 of the lower pot 530, and above the position of flange connection between the side surface 532 of the lower pot 530 and the flange plate 520. Thus, the oil 12 is always stored at the position below the upper end opening 540a in the interior accommodation space.

Consequently, the oil 12 is always present in the site of flange connection between the flange 513 of the upper pot 510 and the flange 533 of the lower pot 530, and in the site of flange connection between the side surface 532 of the lower pot 530 and the flange plate 520. This oil 12 functions as a sealant for the hydrogen gas 11.

Hence, the hydrogen gas 11 can be reliably prevented from leaking from the site of flange connection between the flange 513 of the upper pot 510 and the flange 533 of the lower pot 530, and from the site of flange connection between the side surface 532 of the lower pot 530 and the flange plate 520.

Thus, the incidence of leaks of the hydrogen gas 11, which is a combustible gas, can be dramatically decreased, and safety is improved. Moreover, it becomes unnecessary to set the surroundings of the pipe connection device 500 as the explosion-proof range.

Furthermore, a level detecting mechanism for monitoring the liquid level of the oil 12 stored within the accommodation space can be provided.

By so doing, at a time when the level detecting mechanism detects that the liquid level of the oil 12 has become lower than the upper end opening 540a, it is determined that oil leakage has occurred. Based on this determination, a measure, such as stoppage of the passage of the gas/liquid two-phase fluid 10, may be taken, whereby reliability can be further increased.

In carrying out flushing or the like, the lower pot 530 is detached, as shown in Fig. 8.

That is, the flange connection between the flange 513 of the upper pot 510 and the flange 533 of the lower pot 530 is released, and the flange connection between the side surface 532 of the lower pot 530 and the flange plate 520 is also released. Moreover, the connection between the extension piping 540 and the downstream-side piping 502 is released, and the extension piping 540 is removed.

As shown in Fig. 8, with the lower pot 530 and the extension piping 540 being detached, temporary piping 590 is connected to the downstream-side piping 502, and a flushing liquid F is supplied, whereby a flushing operation can be performed.

In the foregoing Example 4, the gas/liquid two-phase fluid 10 is a mixture of the hydrogen gas 11 and the oil 12. However, Example 4 can be applied, unchanged, even to a gas/liquid two-phase fluid comprising other gas and other liquid mixed.

## Claims

1. An upstream-side piping, a downstream-side piping and a pipe connection device (100), in use the pipe connection device (100) connecting the upstream-side piping (101) and the downstream-side piping (102) for passing a gas/liquid two-phase fluid (10) comprising a gas (11) and a liquid (12) mixed therein, wherein, in use, the downstream-side piping (102) is disposed along a direction from above downward at a position lower than the upstream-side piping (101), the pipe connection device (100) further comprising:
a pot (110) which forms an accommodation space inside, with a lower end surface thereof in an open state, which has a flange (113) formed on a peripheral edge of a lower end thereof, and which is penetrated by the upstream -side piping (101) such that an inflow opening end (101a) of the upstream-side piping (101) is located in the accommodation space;
a flange plate (120) closing the lower end surface of the pot (110), the flange plate (120) being penetrated by the downstream-side piping (102) such that an outflow opening end (102a) of the downstream-side piping (102) is located above a position of the flange connection between the flange (113) of the pot (110) and the flange plate (120); **characterized in that** the flange plate (120) is bolted to the flange (113) of the pot (110) for flange connection, and the pipe connection device (100) comprises
an outflow pipe (103) open at both ends and placed horizontally and disposed in fluid connection at the upper end of the downstream-side piping (102) which upper end is the outflow opening end (102a).

## Patentansprüche

1. Ein stromaufseitiges Rohr, ein stromabseitiges Rohr und eine Rohrverbindungsvorrichtung (100), wobei die Rohrverbindungsvorrichtung (100) im Einsatz das stromaufseitige Rohr (101) und das stromabseitige Rohr (102) verbindet, um ein Gas/Flüssigkeit-Zweiphasen-Fluid (10) mit einem Gas (11) und einer darin eingemischten Flüssigkeit (12) passieren zu lassen, wobei, im Einsatz, das stromabseitige Rohr (102) entlang einer Richtung von oberhalb nach unten an einer Position angeordnet ist, die tiefer ist als das stromaufseitige Rohr (101), wobei die Rohrverbindungsvorrichtung (100) ferner aufweist:
einen Topf (110), der einen Aufnahmeraum im Inneren bildet, wobei sich eine untere Endfläche davon in einem offenen Zustand befindet, der einen Flansch (113) hat, der an einem Umfangsrand eines unteren Endes davon ausgebildet ist, und der von dem stromaufseitigen Rohr (101) so durchsetzt ist, dass ein Einströmungsöffnungsende (101a) des stromaufseitigen Rohrs (101) sich in dem Aufnahmeraum befindet,
eine Flanschplatte (120), die die untere Endfläche des Topfes (110) verschließt, wobei die Flanschplatte (120) von dem stromabseitigen Rohr (102) so durchsetzt ist, das ein Ausströmungsöffnungsende (102a) des stromabseitigen Rohrs (102) sich über einer Position der Flanschverbindung zwischen dem Flansch (113) des Topfs (110) und der Flanschplatte (120) befindet,
**dadurch gekennzeichnet, dass**
die Flanschplatte (120) mit dem Flansch (113) des Topfes (110) für eine Flanschverbindung verschraubt ist, und
die Rohrverbindungsvorrichtung (100) ein Ausströmrohr (103) aufweist, das an beiden Enden offen und horizontal platziert und in Fluidverbindung an dem oberen Ende des stromabseitigen Rohrs (102), welches obere Ende das Ausströmungsöffnungsende (102a) ist.

## Revendications

1. Tuyauterie en amont, tuyauterie en aval et dispositif (100) de raccordement de tuyau, le dispositif (100) de raccordement de tuyau raccordant, en utilisation, la tuyauterie (101) en amont et la tuyauterie (102) en aval, pour faire passer un fluide (10) à deux phases, gaz/liquide, comprenant un gaz (11) et un liquide (12) qui y est mélangé, dans lequel, en utilisation, la tuyauterie (102) en aval est disposée suivant une direction du haut vers le bas, en une position plus basse que la tuyauterie (101) en amont, le dispositif (100) de raccordement de tuyau comprenant en outre :
un pot (110) dont l'intérieur forme un espace de logement, dont la surface d'extrémité inférieure est à l'état ouvert, qui a un rebord (113) formé sur un bord périphérique de son extrémité inférieure et dans lequel pénètre la tuyauterie (101) en amont, de manière à ce qu'une extrémité (101a) d'ouverture d'entrée de la tuyauterie (101) en amont soit placée dans l'espace de logement ;
une semelle (120), fermant la surface d'extrémité inférieure du pot (110), est traversée par la tuyauterie (102) en aval, de manière à ce qu'une extrémité (102a) d'ouverture de sortie de la tuyauterie (102) en aval soit placée au dessus d'une position de liaison du rebord, entre le rebord (113) du pot (110) et la semelle (120), **caractérisé en ce que**
la semelle (120) est boulonnée au rebord (113) du pot (110) pour une liaison du rebord et le dispositif (100) de raccordement de tuyau comprend
un tuyau (103) de sortie qui s'ouvre aux deux extrémités et qui est placé horizontalement et qui est disposé en communication de fluide à l'extrémité supérieure de la tuyauterie (102) en aval, extrémité supérieure qui est l'extrémité (102a) d'ouverture de sortie.
